(19) Europäisches Patentamt
European Patent Office
Office européen des brevets

(11) **EP 4 249 246 A1**

(12) **EUROPEAN PATENT APPLICATION**
published in accordance with Art. 153(4) EPC

(43) Date of publication:
**27.09.2023 Bulletin 2023/39**

(21) Application number: **21910998.0**

(22) Date of filing: **23.12.2021**

(51) International Patent Classification (IPC):
**B32B 27/32** (2006.01) **B65D 30/02** (2006.01)
**B65D 65/40** (2006.01)

(52) Cooperative Patent Classification (CPC):
**B32B 27/32; B65D 29/00; B65D 65/40**

(86) International application number:
**PCT/JP2021/047997**

(87) International publication number:
**WO 2022/138859 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020 JP 2020213965**

(71) Applicants:
• **TOPPAN INC.**
**Tokyo 110-0016 (JP)**

• **TAMAPOLY CO., LTD.**
**Tokyo 171-0022 (JP)**

(72) Inventors:
• **RO, Kazuyoshi**
**Tokyo 110-0016 (JP)**
• **SAKURAI, Akinori**
**Tokyo 171-0022 (JP)**

(74) Representative: **TBK**
**Bavariaring 4-6**
**80336 München (DE)**

(54) **LAMINATE AND PACKAGING BAG**

(57) A laminate including, a base material layer; a first polyethylene resin layer containing a first polyethylene resin and having a melt flow rate of less than 5 g/10 minutes, and a second polyethylene resin layer containing a second polyethylene resin and having a melt flow rate of 5 to 12 g/10 minutes, in this order, in which a ratio $R_2$ (Mw/Mn) of a weight-average molecular weight Mw to a number average molecular weight Mn of the second polyethylene resin is 7 or less.

**Fig.4**

## Description

### Technical Field

The present disclosure relates to a laminate and a packaging bag.

### Background Art

Various types of packaging materials are used in combination depending on properties of the contents to be packaged, the amount of the contents, post-treatment to protect the contents from deterioration, a method of disposing packaging materials, the form in which packaging materials are transported, a method of opening a package, and the like. The term "package" referred to herein means an article composed of a packaging material and contents accommodated therein.

Examples of packaging bags include standing pouch. Standing pouches can make products stand out on commodity shelves at stores, and the scope of their adoption is expanding. To prevent a standing pouch from bending in the middle and allow the entire surface to be seen, a laminate constituting the pouch is required to have a certain degree of rigidity. In addition, if the content is a liquid, the bag must be strong enough not to break when dropped. To correspond to these functions, laminates in which a polyester film, a nylon film, a polyolefin film, and the like are combined have been used.

However, with the growing awareness of environmental issues in recent years, there has been a growing demand for functions such as resource conservation and reuse of various products, and the same functions are required of laminates used for packaging materials.

One method of reusing a laminate in which various materials are combined is to re-separate each material. However, it is necessary to perform various thermal, chemical, and mechanical actions to separate laminates that have been given a predetermined strength as packaging materials. In addition, to classify the separated materials, it is necessary to use a physical action due to specific gravity or spectroscopic methods that differ depending on materials, which is not efficient.

Examples of other methods include mono-materialization of a packaging material. In other words, this is an effort to configure a laminate from the same type of material and reuse the laminate as an integrated material. Patent Literature 1 discloses a laminate including a uniaxially stretched polyolefin resin film and a polyolefin heat-seal layer. The main object of the present invention is a laminate having easy tearability due to a uniaxially stretched film, but the resulting laminate is made of the same type of resin. However, there are no regulations regarding the strength of a packaging material, and it is possible to laminate films with biaxially stretched nylon, polyester, or the like as necessary, which does not address the issue of achieving mono-materialization.

### Citation List

### Patent Literature

[Patent Literature 1] Japanese Patent No. 5197952

### Summary of Invention

### Technical Problem

The present inventors have selected a polyethylene resin as a material for achieving mono-materialization of a packaging material. Under the constraint that various resin materials cannot be used in combination, a laminate including a base material layer and a sealant layer has been produced, and using this laminate, trial production of standing pouches has been repeated. As a result, the present inventors have found a problem that, in the process of producing standing pouches from laminates, the laminates stick to each other, making it difficult to provide the laminates to a bag-making machine. In addition to this, the present inventors have found a problem that, in a process of filling a standing pouch with contents, inner surfaces (sealant layers) of the standing pouch stick to each other, making it difficult to open the pouch.

The present disclosure provides a laminate which is applicable to manufacturing of a packaging bag for which mono-materialization should be achieved, and enables efficient bag making and efficient implementation of a process of filling a packaging bag with contents. In addition, the present disclosure provides a packaging bag containing the above-described laminate.

**Solution to Problem**

One aspect of the present disclosure relates to a laminate. This laminate includes, in this order: a base material layer; a first polyethylene resin layer containing a first polyethylene resin and having a melt flow rate of less than 5 g/10 minutes, and a second polyethylene resin layer containing a second polyethylene resin and having a melt flow rate of 5 to 12 g/10 minutes, in which a ratio $R_2$ (Mw/Mn) of a weight-average molecular weight Mw to a number average molecular weight Mn of the second polyethylene resin is 7 or less. The melt flow rate in the present disclosure means a value measured under the conditions of a load of 2.16 kg and a temperature of 190°C according to the method described in JIS K7210. Mw/Mn of a polyethylene resin can be measured using gel permeation chromatography (GPC).

According to the above-described laminate, the base material layer can constitute the outermost surface, and the second polyethylene resin layer can constitute the innermost surface. The second polyethylene resin layer serves as a sealant layer and plays a role of preventing adhesion. That is, since the molecular weight distribution of the second polyethylene resin constituting the second polyethylene resin layer is relatively sharp, there are few low-molecular-weight components that are likely to express surface adhesiveness. For this reason, even if a certain amount of heat is applied to the second polyethylene resin layer while a base material layer of the other laminate is in contact with the second polyethylene resin layer, the adhesion between the two can be suppressed. In addition, even if a certain amount of heat is applied to second polyethylene resin layers while the second polyethylene resin layers are brought into contact with each other after bag making, the adhesion between the two can be suppressed. The first polyethylene resin layer also serves as a sealant layer. Examples of low-molecular-weight components that can be contained in the second polyethylene resin layer contain a wax-like component having a molecular weight of about several thousands.

Whether the molecular weight distribution of a polyethylene resin is sharp or broad can be evaluated by the ratio (Mw/Mn) of the weight-average molecular weight Mw to the number average molecular weight Mn of the resin. The closer this value is to 1, the sharper the molecular weight distribution, and the larger the value, the broader the molecular weight distribution. If the ratio $R_2$ (Mw/Mn) of the weight-average molecular weight Mw to the number average molecular weight Mn of the second polyethylene resin is 7 or less, the molecular weight distribution of the second polyethylene resin is relatively sharp. By setting the ratio $R_2$ of the second polyethylene resin to this value or less, the second polyethylene resin layer can sufficiently play a role of preventing adhesion.

It is preferable that a thickness Ta of the first polyethylene resin layer and a thickness Tb of the second polyethylene resin layer satisfy conditions below. Since the first polyethylene resin layer is sufficiently thinner than the second polyethylene resin layer, a sealant layer can be efficiently produced through, for example, an inflation method.

$$2 \leq Tb/(Ta+Tb) \times 100 \leq 30$$

It is preferable that the base material layer contain at least a high-density polyethylene resin layer from the viewpoint of heat resistance of the base material layer. In a case where the polyethylene content in the laminate is 90 mass% or more, it can be said that the laminate is composed of a single material (mono-material). In the present disclosure, a mono-material laminate refers to a laminate in which the mass proportion of a specific material (polyethylene resin) is 90 mass% or higher (preferably 95 mass% or higher). The polyethylene resin content in the laminate can be measured using a Fourier transform infrared spectrophotometer (FT-IR).

One aspect of the present disclosure relates to a packaging bag containing the above-described laminate. This packaging bag can realize a mono-material and enables efficient implementation of a process of filling the packaging bag with contents.

**Advantageous Effects of Invention**

According to the present disclosure, there is provided a laminate which is applicable to manufacturing of a packaging bag for which mono-materialization should be achieved, and enables efficient bag making and efficient implementation of a process of filling a packaging bag with contents. In addition, according to the present disclosure, a packaging bag containing the above-described laminate is provided.

**Brief Description of Drawings**

FIG. 1 is a front view schematically showing one embodiment of a standing pouch according to the present disclosure.
FIG. 2 is a cross-sectional view schematically showing a configuration of the standing pouch shown in FIG. 1.
FIG. 3 is a perspective view schematically showing bottom tape and a pair of side body portions constituting the standing pouch shown in FIG. 1.

FIG. 4 is a cross-sectional view schematically showing one embodiment of a laminate according to the present disclosure.

FIG. 5 is a graph showing a relationship between sealing temperatures and sealing strengths.

Description of Embodiment

Hereinafter, an embodiment of the present disclosure will be described in detail. Here, a standing pouch will be described as an example of a packaging bag in which mono-materialization is achieved. Standing pouches are used as refill pouches for shampoo, hand soap, detergent, and the like, and pouches for soup, seasonings, and the like. The present disclosure is not limited to the following embodiment.

<Standing pouch>

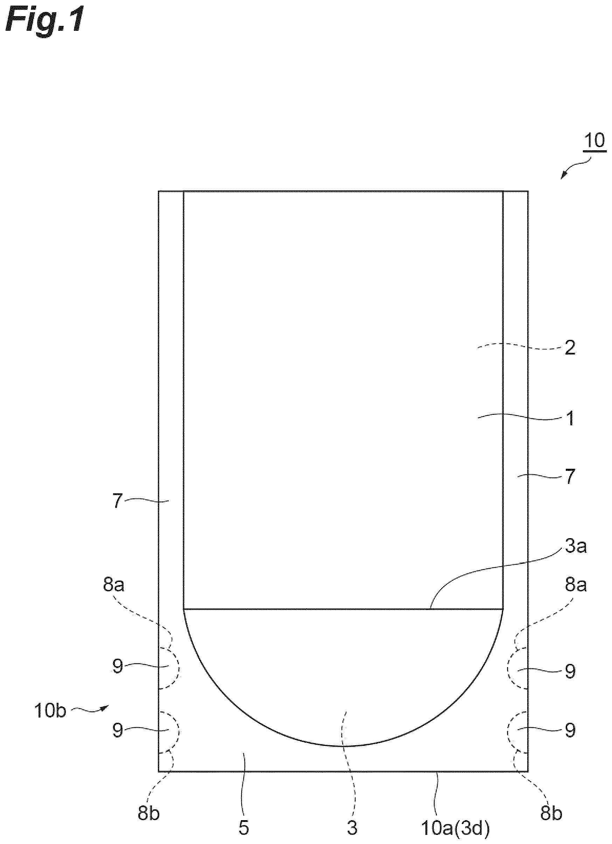

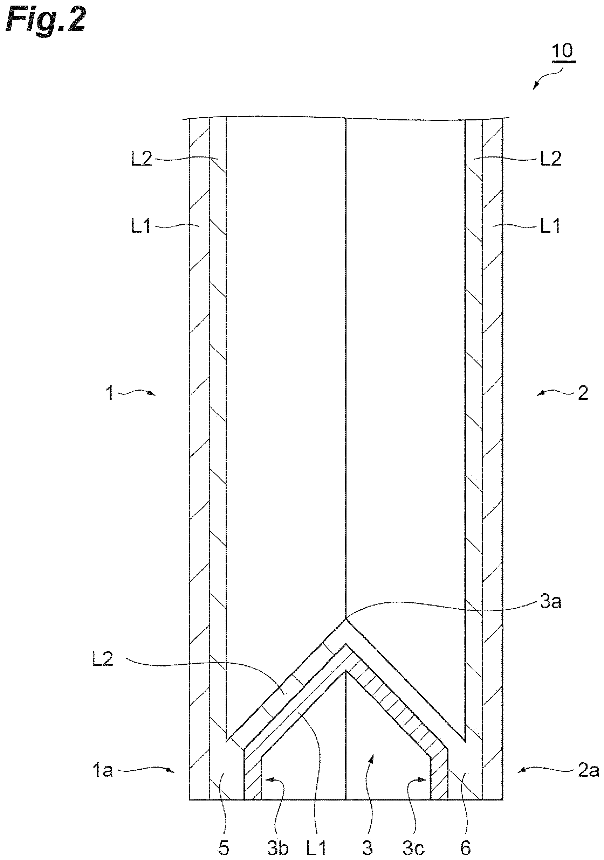

FIG. 1 is a front view schematically showing a standing pouch according to the present embodiment. FIG. 2 is a cross-sectional view schematically showing a configuration of the standing pouch according to the present embodiment. A standing pouch 10 shown in these drawings is formed through heat-sealing a pair of side body portions 1 and 2 a bottom tape 3. Each of the pair of side body portions 1 and 2 and the bottom tape 3 is composed of a laminate containing at least a base material layer L1 and a sealant layer L2 (refer to FIG. 2). The formation of the standing pouch through heat-sealing can be carried out in the same manner as in a method in the related art.

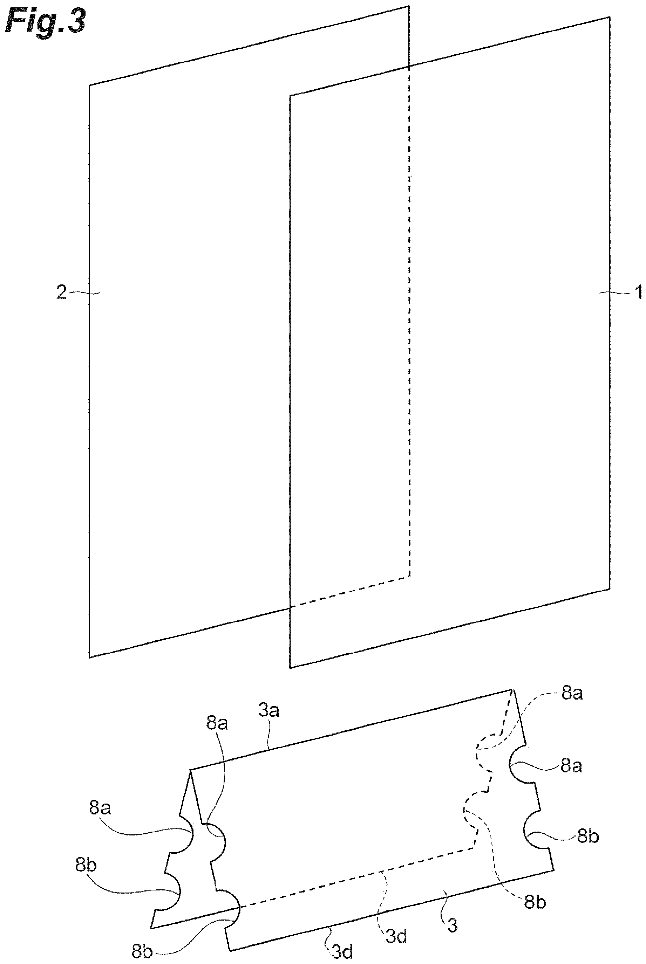

The bottom tape 3 has one mountain fold part 3a. That is, when the standing pouch 10 stands on its own, the bottom tape 3 is placed in an inverted V-shape (refer to FIGS. 2 and 3). The bottom portion of the standing pouch 10 is composed of a heat-sealed portion 5 and a heat-sealed portion 6 as shown in FIG. 2. The heat-sealed portion 5 is a portion obtained by heat-sealing a bottom portion 1a of the side body portion 1 and one bottom portion 3b of the bottom tape 3. The heat-sealed portion 6 is a portion obtained by heat-sealing a bottom portion 2a of the side body portion 2 and the other bottom portion 3c of the bottom tape 3. The side body portions 1 and 2 and the bottom tape 3 are heat-sealed so that a bottom portion of the region for containing contents is curved and an upper side forms a circular arc shape as shown in FIG. 1.

A side portion of the standing pouch 10 is composed of a heat-sealed portion 7. The width of the heat-sealed portion 7 is, for example, 5 to 18 mm, and may be 7 to 15 mm. When the width of the heat-sealed portion 7 is 5 mm or more, sufficient sealing strength is likely to be achieved. On the other hand, when the width thereof is 18 mm or less, a sufficient amount of contents of the standing pouch 10 is likely to be ensured.

As shown in FIG. 1, the standing pouch 10 has fused portions 9 on both sides of a bottom portion 10b. In the present embodiment, two fused portions 9 are formed and arranged vertically on one side of the standing pouch 10, and two fused portions 9 are formed and arranged vertically on the other side. The fused portions 9 join the side body portion 1 to the side body portion 2. The fused portions 9 are portions where sealant layers L2 of the side body portions 1 and 2 are locally fused through cut-out portions 8a and 8b provided in the bottom tape 3. As shown in FIG. 3, the cut-out portions 8a and 8b of the bottom tape 3 are regions between the mountain fold part 3a and bottom sides 3d and 3d and provided in side portions of the bottom tape 3. By providing the fused portions 9 on both sides of the bottom portion 10b, the self-supportability and drop resistance of the standing pouch 10 can be further improved. Here, although a case where two pairs of cut-out portions 8a and 8b are provided on one side of the bottom tape 3 to form two fused portions 9 is exemplified, a pair of cut-out portions may be provided on one side of the bottom tape 3 to form one fused portion 9.

From the viewpoint of recyclability, the polyethylene resin content in the standing pouch 10 is preferably 90 mass% or more. From the viewpoint of achieving a higher degree of mono-materialization, the polyethylene resin content in the standing pouch 10 is more preferably 92 mass% or more and still more preferably 95 mass% or more.

<Laminate>

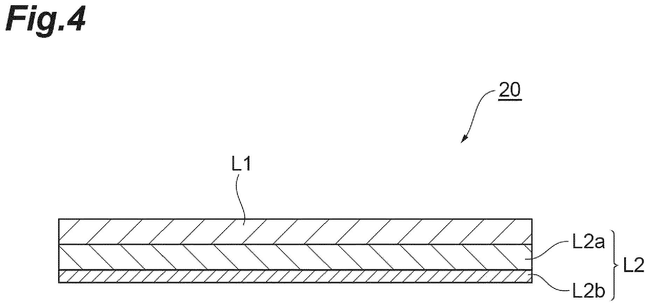

Both the pair of side body portions 1 and 2 and the bottom tape 3 of the standing pouch 10 are substantially made of a polyethylene resin. FIG. 4 is a cross-sectional view schematically showing a laminate according to the present embodiment. A laminate 20 shown in this drawing contains the base material layer L1 and the sealant layer L2. The sealant layer L2 is constituted by a first polyethylene resin layer L2a and a second polyethylene resin layer L2b. The second polyethylene resin layer L2b constitutes the innermost surface of the laminate 20.

The polyethylene resin content in the laminate 20 is preferably 90 mass% or more. If the polyethylene resin content in the laminate 20 is 90 mass% or more, mono-materialization is likely to be achieved, which is preferable. From such a viewpoint, the polyethylene resin content in the laminate 20 is more preferably 92 to 100 mass% and still more preferably 95 to 100 mass%. If mono-materialization can be achieved, resins are likely to be regenerated, which is preferable. The laminate 20 has an excellent impact resistance due to its soft and stretchable firmness.

[Base material layer]

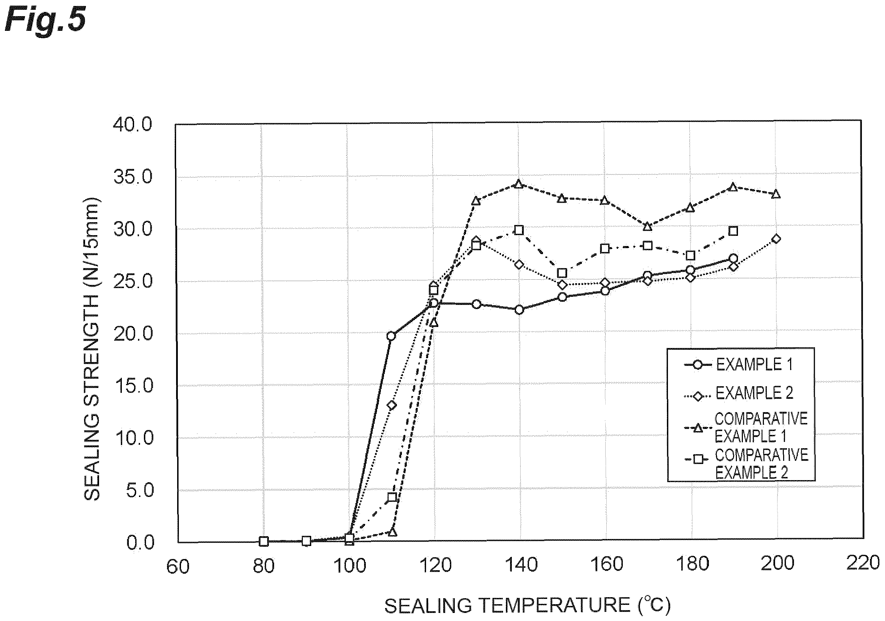

The base material layer L1 is preferably made of an unstretched polyethylene resin film. Since the base material layer L1 is unstretched, the resin has almost no orientation, and is easily stretched against external stresses such as pulling or shearing and difficult to break. The thickness of the base material layer L1 is, for example, 5 to 800 $\mu$m, and may be 5 to 500 $\mu$m or 10 to 50 $\mu$m. The base material layer L1 has a melting point at least 20°C higher than the second polyethylene resin layer L2b and preferably has a melting point at least 25°C higher than that. The difference in melting points between the two can suppress melting of the base material layer L1 during the heat-sealing process. The difference in seal rising temperature between the base material layer L1 and the sealant layer L2 is preferably 25°C or more and more preferably 30°C or more. The seal rising temperature means the temperature at which sealing strength develops, as shown in FIG. 5. The melting point of a polyethylene resin can be measured using a differential scanning calorimeter (DSC).

The melting point of the base material layer L1 is preferably 120°C or higher and more preferably 125°C or higher. Examples of polyethylene resins constituting the base material layer L1 include a high-density polyethylene resin (HDPE) and a medium-density polyethylene resin (MDPE). Among these, HDPE and MDPE having a density of 0.925 g/cm$^3$ or higher are preferably used from the viewpoint of heat resistance. In particular, a high-density polyethylene resin having a density in a range of 0.93 to 0.98 g/cm$^3$ is preferably used.

The polyethylene resin constituting the base material layer L1 is not limited to those derived from petroleum, but may be partly or wholly a resin material of biological origin (for example, biomass polyethylene in which ethylene of biomass origin is used as a raw material). A method for producing a polyethylene resin of biomass origin is disclosed in, for example, Japanese Unexamined Patent Publication No. 2010-511634. The base material layer L1 may contain commercially available biomass polyethylene (such as Green PE manufactured by Braskem S. A.), or may contain mechanically recycled polyethylene made from used polyethylene products or resins (so-called burrs) produced in the manufacturing process of polyethylene products.

The base material layer L1 may contain components other than the polyethylene resin. Examples thereof include polyamide, polyethylene terephthalate, polypropylene, polyvinyl alcohols, and biodegradable resin materials (for example, polylactic acid, polycaprolactone, polyhydroxyalkanoate, polyglycolic acids, modified polyvinyl alcohols, casein, and modified starch). The base material layer L1 may contain additives such as an antistatic agent, an ultraviolet absorber, a plasticizer, a lubricant, and a colorant. The amount of component other than the polyethylene resin in the base material layer L1 is, based on a total amount of the base material layer L1, preferably 0 to 15 mass% and more preferably 0 to 10 mass%.

The base material layer L1 may be a single layer, or may be formed of a plurality of layers. From the viewpoint of heat resistance, the base material layer L1 preferably contains at least a high-density polyethylene resin layer (a layer containing a high-density polyethylene resin).

[Sealant layer]

As described above, the sealant layer L2 is constituted by a first polyethylene resin layer L2a and a second polyethylene resin layer L2b. The thickness of the sealant layer L2 is, for example, 40 to 150 $\mu$m, and may be 20 to 250 $\mu$m.

(First polyethylene resin layer)

The first polyethylene resin layer L2a contains a first polyethylene resin and has a melt flow rate of less than 5 g/10 minutes. The melt flow rate of the first polyethylene resin layer L2a is preferably 0.5 g/10 minutes or more and less than 5 g/10 minutes, and more preferably 2 g/10 minutes or more and less than 5 g/10 minutes. A melt flow rate of less than 5 g/10 minutes results in higher melt tension, which facilitates suppressing of wrinkles during processing through an inflation method or the like. That is, it is inferred that, when the sealant layer L2 is heated to melt, the first polyethylene resin layer L2a is less likely to flow than the second polyethylene resin layer L2b, and the first polyethylene resin layer L2a serves as a support base material to maintain high film formation accuracy, resulting in a smooth and highly transparent film.

The ratio $R_1$ (Mw/Mn) of the weight-average molecular weight Mw to the number average molecular weight Mn of the polyethylene resin constituting the first polyethylene resin layer L2a may be, for example, 1 to 12, 1 to 8, 1 to 6, 1 to 5, 1 to 4.5, or 1 to 4. The molecular weight distribution of the first polyethylene resin may be sharper than the molecular weight distribution of the second polyethylene resin. If the molecular weight distribution of the first polyethylene resin is sharp, there are few low-molecular-weight components and such components can be suppressed from appearing on the surface of the sealant layer L2 via the second polyethylene resin layer L2b. In a case where the first polyethylene resin layer L2a and the second polyethylene resin layer L2b are each composed of a single polyethylene resin, if the ratio $R_1$ of the first polyethylene resin is smaller than the ratio $R_2$ of the second polyethylene resin, it can be determined that the molecular weight distribution of the first polyethylene resin is sharper than that of the second polyethylene resin.

The melting point of the first polyethylene resin layer L2a is preferably 120°C or lower and more preferably 95°C to 110°C. That is, the first polyethylene resin layer L2a is preferably composed of a polyethylene resin having a melting point of 120°C or lower and more preferably composed of a polyethylene resin having a melting point of 95°C to 110°C. The first polyethylene resin layer L2a is preferably composed of a polyethylene resin having a density of less than 0.925 g/cm$^3$ (more preferably 0.900 to 0.920 g/cm$^3$). Specific examples thereof include a linear low-density polyethylene resin (LLDPE) and a very low-density polyethylene resin (VLDPE). A blend of these polyethylene resins may be used.

The first polyethylene resin layer L2a may contain a plurality of polyethylene resins as first polyethylene resins. In the case where the first polyethylene resin layer L2a contains a plurality of polyethylene resins, the first polyethylene resin layer L2a preferably contains at least a polyethylene resin that satisfies at least one of the ranges of the above-described ratio $R_1$, melting point, and density.

The content of the polyethylene resin that satisfies at least one of the ranges of the above-described ratio $R_1$, melting point, and density may be, based on the total mass of the polyethylene resins constituting the first polyethylene resin layer L2a, 60 to 100 mass%, 80 to 100 mass%, 90 to 100 mass%, or 95 to 100 mass%. The content of the polyethylene resin that satisfies at least one of the ranges of the above-described ratio $R_1$, melting point, and density may be substantially 100 mass% (a mode in which a first polyethylene resin layer L2a is made of a polyethylene resin that satisfies at least one of the ranges of the above-described ratio $R_1$, melting point, and density) based on the total mass of the polyethylene resins constituting the first polyethylene resin layer L2a.

The first polyethylene resin layer L2a may contain additives such as an antioxidant, a slipping agent, a flame retardant, an anti-blocking agent, a light stabilizer, a dehydrating agent, a tackifier, a crystal nucleating agent, and a plasticizer. The amount of component other than the polyethylene resins in the first polyethylene resin layer L2a is, based on the total amount of the first polyethylene resin layer L2a, preferably 0 to 15 mass% and more preferably 0 to 10 mass%.

The first polyethylene resin layer L2a is preferably sufficiently thicker than the second polyethylene resin layer L2b. That is, the proportion of the thickness of the first polyethylene resin layer L2a is preferably 70% to 98% based on the total thickness of the sealant layer L2. When this proportion is 70% or higher, the stability of film formation can increase and a smooth film without wrinkles can be supplied. On the other hand, when this proportion is 98% or lower, the second polyethylene resin layer L2b can sufficiently play a role of preventing adhesion. This proportion is more preferably 75% to 95% and still more preferably 80% to 90%.

(Second polyethylene resin layer)

The second polyethylene resin layer L2b contains a second polyethylene resin and has a melt flow rate of 5 to 12 g/10 minutes. The melt flow rate of the second polyethylene resin layer L2b is preferably 5 to 10 g/10 minutes, and more preferably 6 to 9 g/10 minutes. A melt flow rate of 5 g/10 minutes or more results in a low extrusion load during production, less heat generation inside an extruder, and less resin degradation. That is, it is inferred that, when the sealant layer L2 is heated to melt, the second polyethylene resin layer L2b is more likely to flow than the first polyethylene resin layer L2a, thereby providing low-temperature sealability and reducing low-molecular-weight components formed through resin decomposition due to thermal deterioration.

The ratio $R_2$ (Mw/Mn) of the weight-average molecular weight Mw to the number average molecular weight Mn of the second polyethylene resin constituting the second polyethylene resin layer L2b is, 7 or less, and may be 1.5 to 7, 2 to 6, 3 to 6, 4 to 6, 4.5 to 6, or 5 to 6. By setting the ratio $R_2$ of the second polyethylene resin to 7 or less, the second polyethylene resin layer L2b can sufficiently play a role of preventing adhesion. That is, a sharp molecular weight distribution means a low content of low-molecular-weight components. Few low-molecular-weight components reduce tackiness and the melting point rises steeply, which suppresses sticking even when, for example, a certain amount of heat is applied in a state where seal surfaces are brought into contact with each other. A polyethylene resin having a sharp molecular weight distribution can be obtained through, for example, a gas phase polymerization method in which a metallocene catalyst is used.

The melting point of the second polyethylene resin layer L2b is preferably 120°C or lower and more preferably 95°C to 110°C. That is, the second polyethylene resin layer L2b is preferably composed of a polyethylene resin having a melting point of 120°C or lower and more preferably composed of a polyethylene resin having a melting point of 95°C to 110°C. The second polyethylene resin layer L2b is preferably composed of a polyethylene resin having a density of less than 0.925 g/cm$^3$ (more preferably 0.900 to 0.920 g/cm$^3$). Specific examples thereof include a linear low-density polyethylene resin (LLDPE) and a very low-density polyethylene resin (VLDPE). A blend of these polyethylene resins may be used.

The second polyethylene resin layer L2b may contain a plurality of polyethylene resins as second polyethylene resins. In the case where the second polyethylene resin layer L2b contains a plurality of polyethylene resins, the second polyethylene resin layer L2b preferably contains at least a polyethylene resin that satisfies at least one of the ranges of the above-described ratio $R_2$, melting point, and density.

The content of the polyethylene resin that satisfies at least one of the ranges of the above-described ratio $R_2$, melting point, and density may be, based on the total mass of the polyethylene resins constituting the second polyethylene resin layer L2b, 60 to 100 mass%, 80 to 100 mass%, 90 to 100 mass%, or 95 to 100 mass%. The content of the polyethylene resin that satisfies at least one of the ranges of the above-described ratio $R_2$, melting point, and density may be substantially 100 mass% (a mode in which a second polyethylene resin layer L2b is made of a polyethylene resin that satisfies at least one of the ranges of the above-described ratio $R_2$, melting point, and density) based on the total mass of the polyethylene resins constituting the second polyethylene resin layer L2b.

In a case where the second polyethylene resin layer L2b contains a plurality of polyethylene resins, the content of a polyethylene resin having a ratio $R_2$ exceeding 6 among the second polyethylene resins constituting the second polyethylene resin layer L2b is, based on the total mass of the polyethylene resins constituting the second polyethylene resin layer L2b, preferably 0 to 5 mass% and more preferably 0 to 1 mass%. The second polyethylene resin layer L2b may not contain a polyethylene resin having a ratio $R_2$ exceeding 6.

In a case where the first polyethylene resin layer L2a and/or the second polyethylene resin layer L2b contain a plurality of polyethylene resins, the sharper molecular weight distribution of the first polyethylene resins than that of the second polyethylene resins can be confirmed by the fact that a weighted average value calculated by taking into account the content of each polyethylene resin to the total amount of the first polyethylene resins from the ratio $R_1$ of each polyethylene resin in the first polyethylene resin layer L2a is smaller than a weighted average value calculated by taking into account the content of each polyethylene resin to the total amount of the second polyethylene resins from the ratio $R_2$ of each polyethylene resin in the second polyethylene resin layer L2b.

The second polyethylene resin layer L2b may contain additives such as an antioxidant, a slipping agent, a flame retardant, an anti-blocking agent, a light stabilizer, a dehydrating agent, a tackifier, a crystal nucleating agent, and a plasticizer. The amount of component other than the polyethylene resins in the second polyethylene resin layer L2b is, based on the total amount of the second polyethylene resin layer L2b, preferably 0 to 15 mass% and more preferably 0 to 10 mass%.

The second polyethylene resin layer L2b is preferably sufficiently thinner than the first polyethylene resin layer L2a. That is, the proportion of the thickness of the second polyethylene resin layer L2b is preferably 2% to 30% based on the total thickness of the sealant layer L2. When this proportion is 2% or higher, the second polyethylene resin layer L2b can sufficiently play a role of preventing adhesion. On the other hand, when this proportion is 30% or lower, the sealant layer L2 is likely to be formed. This proportion is more preferably 5% to 25% and still more preferably 10% to 20%.

As some or all of the polyethylene resins constituting the sealant layer L2, biomass polyethylene using ethylene of biomass origin as a raw material may be used. Such a sealant film is disclosed in, for example, Japanese Unexamined Patent Publication No. 2013-177531. The sealant layer L2 may contain mechanically recycled polyethylene made from used polyethylene products or resins (so-called burrs) produced in the manufacturing process of polyethylene products.

(Other layers)

A laminate may include an adhesive layer (not shown in the drawing) between a base material layer L1 and a sealant layer L2. An adhesive forming the adhesive layer can be selected according to a bonding method, and a urethane adhesive, a polyester adhesive, and the like can be used. By providing such an adhesive layer, the interlayer adhesion between the base material layer L1 and the sealant layer L2 is increased and delamination is less likely to occur, whereby pressure resistance or impact resistance of a pouch can be maintained.

The adhesive layer preferably does not contain chlorine. Since the adhesive layer does not contain chlorine, it is possible to prevent an adhesive or a regenerated resin after recycling from being colored or smelling bad due to heat treatment. A biomass material is preferably used for the adhesive layer from the viewpoint of environmental consideration. In addition, biomass polyethylene can be used for a polyethylene resin. From the viewpoint of environmental consideration, the adhesive preferably does not contain a solvent.

The laminate may further include, for example, a gas barrier layer from the viewpoint of improving gas barrier properties against water vapor or oxygen. The gas barrier layer may be provided between the base material layer L1 and the sealant layer L2, or may be provided on the surface of the base material layer L1 opposite to the sealant layer L2. The amount of water vapor permeation of the laminate may be, for example, 5 g/m²·day or less, 1 g/m²·day or less, or 0.5 g/m²·day or less. The amount of oxygen permeation of the laminate may be, for example, 1 cc/m²·day·atm or less, 0.5 cc/m²·day·atm or less, or 0.2 cc/m²·day·atm or less. The inclusion of a gas barrier layer in the laminate protects contents from deteriorating due to water vapor or oxygen, and the long-term quality is likely to be maintained.

Examples of gas barrier layers include a vapor deposition layer of an inorganic oxide. By using a vapor deposition layer of an inorganic oxide, it is possible to obtain high barrier properties with a very thin layer that does not affect the recyclability of the laminate. Examples of inorganic oxides include aluminum oxide, silicon oxide, magnesium oxide, and tin oxide. From the viewpoints of transparency and barrier properties, an inorganic oxide may be selected from the group consisting of aluminum oxide, silicon oxide, and magnesium oxide. The thickness of a vapor deposition layer of an inorganic oxide can be set to, for example, 5 nm to 100 nm, and may be 10 nm to 50 nm. When the thickness thereof is 5 nm or thicker, the barrier properties are likely to be exhibited favorably, and when the thickness thereof is 100 nm or thinner, the flexibility of the laminate is easily maintained. A vapor deposition layer can be formed through, for example, a physical vapor phase growth method and a chemical vapor phase growth method.

The laminate may include a metal layer (metal foil) instead of or in addition to the vapor deposition layer of the inorganic oxide. Various metal foils made of aluminum, stainless steel, and the like can be used as metal layers, and among these, aluminum foil is preferable from the viewpoints of moisture-proof properties, workability such as spreadability, costs, and the like. General soft aluminum foil can be used as aluminum foil. Among these, aluminum foil containing iron is preferable from the viewpoints of excellent pinhole resistance and spreadability during molding. In a case where a metal layer is provided, the thickness thereof may be 7 to 50 $\mu$m and 9 to 15 $\mu$m from the viewpoints of barrier properties, pinhole resistance, and workability.

A laminate may include an anchor coat layer between the base material layer L1 and the sealant layer L2. The anchor coat layer may be a very thin layer that does not affect the recyclability of the laminate, and can be formed using an anchor coat agent. Examples of anchor coat agents include an acrylic resin, an epoxy resin, an acrylic urethane resin, a polyester-polyurethane resin, a polyether-polyurethane resin, and a polyvinyl alcohol resin. As the anchor coat agents, an acrylic urethane resin and a polyester-polyurethane resin are preferable from the viewpoints of heat resistance and interlayer adhesive strength.

The laminate may further include, for example, a printed layer. The printed layer may be provided between the base material layer L1 and the sealant layer L2, or may be provided on the surface of the base material layer L1 opposite to the sealant layer L2. In a case where a printed layer is provided, printing ink that does not contain chlorine is preferably used from the viewpoint of preventing the printed layer from being colored or smelling bad during remelting. In addition, a biomass material is preferably used for a compound contained in a printing ink from the viewpoint of environmental consideration.

The embodiment of the present disclosure has been described above in detail, but the present disclosure is not limited to the above-described embodiment. For example, in the above-described embodiment, a standing pouch has been exemplified as an application target of a laminate, but the laminate according to the embodiment may be applied to manufacture of other packaging bags. For example, one laminate may be folded into two so that sealant layers face each other and then sealed on three sides to form a bag, or two laminates may be stacked so that sealant layers face each other and then heat-sealed on four sides to form a bag. Packaging bags can accommodate contents such as foods and medicaments as contents. Packaging bags can be subjected to heat sterilization treatment such as boiling treatment.

[Examples]

Hereinafter, the present disclosure will be described in more detail with reference to examples. However, the present disclosure is not limited by the following examples.

(Example 1)

The following materials were used to produce laminates.

· Base material layer: Unstretched HDPE film (thickness: 35 $\mu$m, density: 0.948 g/cm$^3$, melting point: 135°C)
· Adhesive layer: Urethane adhesive
· First seal layer: LLDPE with low-temperature sealability (density: 0.916 g/cm$^3$, MFR: 4.0 g/10 minutes, melting point: 102°C, Mw/Mn: 4.0)
· Second seal layer: anti-adhesion VLDPE (density: 0.913 g/cm$^3$, MFR: 10.0 g/10 minutes, melting point: 104°C, Mw/Mn: 5.5)

The first seal layer (thickness: 80 $\mu$m) was provided on the surface of a support film. A sealant layer having a two-layer structure was obtained by providing the second seal layer (thickness: 20 $\mu$m) on the surface of this first seal layer. Each laminate according to Example 1 was obtained by adhering the sealant layer to the base material layer via the adhesive layer (thickness: 1 to 2 $\mu$m). After adhering the base material layer to the sealant layer, the above-described support film was peeled off. As a resin constituting the first seal layer, a resin having a sharper molecular weight distribution than that of a resin constituting the second seal layer was used.

(Example 2)

Each laminate according to Example 2 was obtained in the same manner as in Example 1 except that the second seal layer was formed using a blend of the following two types of polyethylene resins (density: 0.912 g/cm$^3$, MFR: 5.0 g/10 minutes, melting point: 103°C).

· LLDPE (density: 0.915 g/cm$^3$, MFR: 7 g/10 minutes, melting point: 102°C, Mw/Mn: 4.0)
· VLDPE (density: 0.913 g/cm$^3$, MFR: 8 g/10 minutes, melting point: 104°C, Mw/Mn: 5.5)

5 parts by mass of LLDPE and 5 parts by mass of VLDPE were blended. As a resin constituting the first seal layer, a resin having a sharper molecular weight distribution than that of the resins constituting the second seal layer was used.

(Comparative Example 1)

Each laminate according to Comparative Example 1 was obtained in the same manner as in Example 1 except that a single-layer sealant layer (thickness: 100 $\mu$m) was provided using the following polyethylene resin instead of providing the sealant layer having a two-layer structure.

· Sealant layer: LLDPE with low-temperature sealability (density: 0.916 g/cm$^3$, MFR: 4.0 g/10 minutes, melting point: 105°C, Mw/Mn: 10.0)

(Comparative Example 2)

Each laminate according to Comparative Example 2 was obtained in the same manner as in Example 1 except that a single-layer sealant layer (thickness: 100 $\mu$m) was provided using the following polyethylene resin instead of providing the sealant layer having a two-layer structure.

· Sealant layer: LLDPE with low-temperature sealability (density: 0.915 g/cm$^3$, MFR: 2.0 g/10 minutes, melting point: 102°C, Mw/Mn: 11.0)

<Sealing strength>

The sealing strengths of the laminates according to the examples and the comparative examples were measured as follows. That is, laminates were overlapped so that the sealant layers faced each other and sealed using a heat sealer having a width of 10 mm. The sealing conditions were pressure: 0.2 MPa and time: 1.0 second. The sealing was performed at a predetermined sealing temperature (from 80°C to 200°C at intervals of 10°C). Each test piece was obtained by cutting the sealed packaging material into a width of 15 mm. A T-peel test was carried out using a tensile tester at a rate of 300 mm/min. FIG. 5 shows a relationship between the sealing temperature and the sealing strength (N/15 mm). Table 1 shows peeling modes of the test pieces (sealing temperature: 120°C and 140°C) after the T-peel test. The peeling modes were visually observed.

[Table 1]

| | Sealing temperature | |
|---|---|---|
| | 120°C | 140°C |
| Example 1 | Cohesive peeling | Cohesive peeling |
| Example 2 | Cohesive peeling | Cohesive peeling |
| Comparative Example 1 | Interfacial peeling | Interfacial peeling |
| Comparative Example 2 | Interfacial peeling | Interfacial peeling |

<Manufacture of standing pouch>

The laminates according to the examples and the comparative examples were used as main bodies and bottom materials, and standing pouches were manufactured using a bag-making machine manufactured by Totani Corporation. The pouch size was as follows.

· Top and bottom: 230 mm
· Width: 150 mm
· Folding width: 40 mm

In the laminates of Comparative Example 3, the base material layers were thermally fused to a seal bar of the bag-making machine, so it was impossible to make a bag.

(Evaluation of opening properties)

The standing pouches according to the examples and the comparative examples were each passed through nip rolls heated to 60°C under a pressure of 0.5 MPa. Thereafter, a force required to open an opening portion of each standing pouch was measured. The results are shown in Table 2.

(Pressure-resistance test)

About 400 mL of normal-temperature water was sealed in each of the standing pouches according to the examples and the comparative examples. Breakage of each bag was confirmed when a static load of 80 kgf was applied to each sealed body for 1 minute. This test was performed 10 times to measure the number of bags broken. The results are shown in Table 2.

(Drop test)

About 400 mL of normal-temperature water was sealed in each of the standing pouches. Breakage of each bag was confirmed when each sealed body was dropped 10 times from a height of 1 m in an upright position. This test was performed 5 times to measure the number of bags broken. The results are shown in Table 2.

[Table 2]

| | Force required for opening (N) | Pressure-resistance test (number of bags broken I number of evaluations) | Drop test (number of bags broken I number of evaluations) |
|---|---|---|---|
| Example 1 | 0.00 | 0/10 | 0/5 |
| Example 2 | 0.01 | 0/10 | 0/5 |
| Comparative Example 1 | 0.10 | 1/10 | 3/5 |
| Comparative Example 2 | 0.25 | 1/10 | 1/5 |

**Reference Signs List**

1,2 Side body portion
1a, 2a, 3b, 3c, 10b Bottom portion
3 Bottom tape
3a Mountain fold part
3d Bottom side
5, 6, 7 Heat-sealed portion
8a, 8b Cut-out portion
9 Fused portion
10 Standing pouch
20 Laminate
L1 Base material layer
L2 Sealant layer
L2a First polyethylene resin layer
L2b Second polyethylene resin layer

**Claims**

1. A laminate comprising, in this order:

   a base material layer;
   a first polyethylene resin layer comprising a first polyethylene resin and having a melt flow rate of less than 5 g/10 minutes, and
   a second polyethylene resin layer comprising a second polyethylene resin and having a melt flow rate of 5 to 12 g/10 minutes,
   wherein a ratio $R_2$ (Mw/Mn) of a weight-average molecular weight Mw to a number average molecular weight Mn of the second polyethylene resin is 7 or less.

2. The laminate according to claim 1,
   wherein a molecular weight distribution of the first polyethylene resin is sharper than a molecular weight distribution of the second polyethylene resin.

3. The laminate according to claim 1 or 2,
   wherein a thickness Ta of the first polyethylene resin layer and a thickness Tb of the second polyethylene resin layer satisfy conditions below.

$$2 \leq Tb/(Ta+Tb) \times 100 \leq 30$$

4. The laminate according to any one of claims 1 to 3,
   wherein the base material layer comprises at least a high-density polyethylene resin layer.

5. The laminate according to any one of claims 1 to 4,
   wherein a polyethylene resin content is 90 mass% or more.

6. A packaging bag comprising:
   the laminate according to any one of claims 1 to 5.

*Fig.1*

*Fig.2*

# Fig.3

*Fig.4*

20

L1

L2a

L2

L2b

Fig.5

## INTERNATIONAL SEARCH REPORT

| International application No. |
| --- |
| **PCT/JP2021/047997** |

**A. CLASSIFICATION OF SUBJECT MATTER**

***B32B 27/32***(2006.01)i; ***B65D 30/02***(2006.01)i; ***B65D 65/40***(2006.01)i
FI:   B32B27/32 E; B65D30/02; B65D65/40 D

According to International Patent Classification (IPC) or to both national classification and IPC

**B. FIELDS SEARCHED**

Minimum documentation searched (classification system followed by classification symbols)
     B32B1/00-43/00; B65D30/02; B65D65/40

Documentation searched other than minimum documentation to the extent that such documents are included in the fields searched

     Published examined utility model applications of Japan 1922-1996
     Published unexamined utility model applications of Japan 1971-2022
     Registered utility model specifications of Japan 1996-2022
     Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 8-323939 A (TOYO BOSEKI) 10 December 1996 (1996-12-10)<br>     claims, paragraphs [0008]-[0009], [0015]-[0017], [0019]-[0020], [0023] | 1-6 |
| A | JP 2008-155527 A (DENKI KAGAKU KOGYO KK) 10 July 2008 (2008-07-10)<br>     entire text | 1-6 |
| P, A | JP 2021-11018 A (TOPPAN PRINTING CO LTD) 04 February 2021 (2021-02-04)<br>     entire text, in particular, example 2 | 1-6 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 March 2022** | **15 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/047997**

| Patent document cited in search report | | | Publication date (day/month/year) | Patent family member(s) | Publication date (day/month/year) |
|---|---|---|---|---|---|
| JP | 8-323939 | A | 10 December 1996 | (Family: none) | |
| JP | 2008-155527 | A | 10 July 2008 | (Family: none) | |
| JP | 2021-11018 | A | 04 February 2021 | (Family: none) | |

Form PCT/ISA/210 (patent family annex) (January 2015)

**EP 4 249 246 A1**

## REFERENCES CITED IN THE DESCRIPTION

**Patent documents cited in the description**

- JP 5197952 B
- JP 2010511634 A
- JP 2013177531 A